# EUROPEAN PATENT APPLICATION

(11) **EP 4 717 349 A1**
(43) Date of publication of application: **01.04.2026**
(21) Application number: 25202892.3
(22) Date of filing: 17.09.2025
(51) Int. Cl.: B01J 19/02, B01J 19/24, B22F 3/15, B22F 5/10

(54) **REACTOR VESSEL AND METHODS OF MANUFACTURING**

(30) Priority: 30.09.2024 US 202418902815
(71) Applicant: Aerospace Carbon Solutions LLC, Evendale, OH 45215 (US)
(72) Inventor: HUANG, Shenyan, Niskayuna, 12309-1027 (US); MORRA, Martin Matthew, Niskayuna, 12309-1027 (US)
(74) Representative: Openshaw & Co.

(57) **Abstract**

Systems and methods for manufacturing a reactor vessel are described herein. In some approaches, the reactor vessel comprises an inner reactor wall (406) comprising a first material and an outer reactor wall (404) comprising a second material. A cavity (408) is bounded by the inner reactor wall (406) and the outer reactor wall (404). The cavity has a non-uniform width extending between the inner reactor wall (406) and the outer reactor wall (404) along a height of the reactor vessel. The first and second material and joints between are formed with a density of greater than 95 percent of the theoretical density. In some embodiments, the inner reactor wall (406) and the outer reactor wall (404) are formed as a single integral component without welds or cladding.

## Description

### TECHNICAL FIELD

These teachings relate generally to reactor vessels and, in particular, to methods of manufacturing reactor vessels.

### BACKGROUND

Reactor vessels are commonly used components in various chemical processes, including the production of synthesis gas ("syngas") and sustainable aviation fuel (SAF). These reactor vessels must withstand harsh environment and operating conditions, including high temperatures and pressures, as well as corrosive chemicals. Traditional methods of manufacturing reactor vessels often involve welding or cladding. In addition, traditional manufacturing methods may involve high machining costs when the vessel design involves complex features. Accordingly, it may be desirable to provide a method of manufacturing a reactor vessel that is capable of withstanding the harsh environments and versatile operating conditions.

### BRIEF DESCRIPTION OF DRAWINGS

Various needs are at least partially met through provision of the reactor vessel and methods of manufacturing described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is an illustration of a capsule assembly, in accordance with various embodiments;
FIG. 2 is a cross-section image of a capsule assembly, in accordance with various embodiments;
FIG. 3 is a flow diagram of a method of processing a capsule assembly in accordance with various embodiments; and
FIG. 4 is a schematic illustration of a manufacturing process in accordance with various embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods for manufacturing a reactor vessel described herein utilize a capsule assembly and a heat and pressure process to produce a double-walled reactor vessel. The capsule assembly includes an inner and outer capsule wall, with an insert disposed therebetween to form a first and second channel. A first material and second material are loaded into the first and second channels. The systems and methods described herein include subjecting a capsule assembly to a process including powder loading, outgassing, sealing, heat and pressure processing, and leaching to manufacture a reactor vessel. The reactor vessel includes an inner reactor wall comprising a first material, an outer reactor wall comprising a second material, and a cavity bounded by the inner reactor wall and the outer reactor wall. The cavity forms a cooling channel in the reactor. The cavity has a width extending between the inner reactor wall and the outer reactor wall that may be non-uniform along the reactor height. According to the systems and methods herein, the first and second material and joints between them are formed with a density of greater than 95 percent of its theoretical density.

Traditional approaches for manufacturing a reactor vessel may involve welding sheets of metal together to form the shell of the vessel with rings or circular sections welded to the ends of the shell. After welding, the welded vessel may undergo rigorous, labor intensive inspection and testing methods to detect any defects. One type of reactor commonly produced by such an approach is a double walled double-walled reactor vessel with a water jacket. The double-walled reactor vessels have simple geometries of inner and outer shells. Further, when the end-use of the reactor involves high operating temperatures (such as > 600°C) and/or harsh corrosive environments, the inner shell requires nickel (Ni)-based alloys instead of steel, which increases cost. Dissimilar metal welds of Ni alloy and steel are needed to fabricate double-walled reactor vessels, but such alloy compositions may exhibit poor weldability. Additionally, the welds may have microstructural weakness and may cause property debits.

Advantageously, the systems and methods for manufacturing a reactor vessel described herein may be used to produce a double-walled reactor vessel that operates at high temperatures. Using the approaches described herein, it is possible to manufacture a double-walled reactor as one integral component without welds, clads, and associated material property debit. In addition, integral cavity cooling channels with a non-uniform cross section may be formed. The complex integral cooling features help tailor location specific heat transfer or cooling flow. In addition, penetrations and tube, pipe, or valve attachment stubs may be incorporated in the double-walled reactor vessel. Thus, the double-walled reactor vessel offers versatile operating conditions, resistance to harsh environments, improved thermal management, and low-cost manufacturing compared to extensive machining for complex geometries.

Further, the systems and methods for manufacturing a reactor vessel described herein may be used to produce a double-walled reactor vessel that comprises different alloys for the inner and outer reactor walls. Using the approaches described herein, a double-walled reactor vessel may be manufactured through a hot isostatic pressing (HIP) process to allow for HIP diffusion bonding of dissimilar alloys, which may be difficult to weld using traditional approaches. The use of different alloys for the inner and outer reactor walls may increase the corrosion resistance and structural integrity during operation at high temperatures.

It is contemplated that the systems and methods for manufacturing a reactor vessel described herein can be used in numerous applications. One exemplary application is in the power-to-liquids (PTL) processes that produce chemicals that are in liquid form at ambient temperature and pressure from renewable energy sources. There are many examples of PTL process that may be used. For example, such PTL processes may include power-to-methanol (P2M) process, Fischer-Tropsch (FT) process, or methanol synthesis.

As used herein, a material is 100% densified when it has achieved 100% of its theoretical density, the theoretical density being a maximum achievable density of a particular element, compound, or alloy assuming no internal voids.

As used herein, a metallic material is a material that includes metal such as, but not limited to, titanium, iron, aluminum, stainless steel, chromium, and nickel alloys. A metallic material or alloy can be a combination of at least two or more elements or materials, where at least one is a metal.

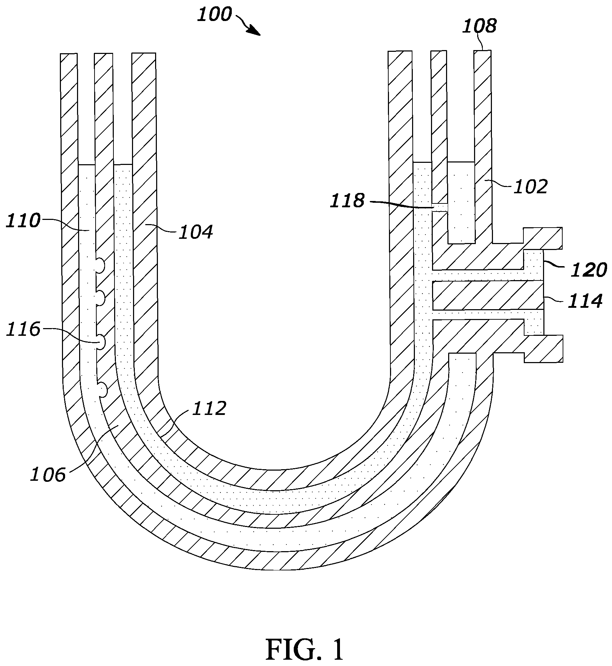

Turning to the figures, FIG. 1 illustrates an exemplary capsule 100 for manufacturing a double-walled reactor vessel. The capsule 100 provided herein is configured to manufacture reactor vessels capable of withstanding the harsh environments of various chemical processes, such as sustainable aviation fuel production. The capsule 100, in one example, is sized to form a reactor vessel with a reactor height up to 20 meters (m) and a diameter up to 10 meters (m). In some examples, the capsule 100 is sized to form a reactor vessel with a reactor height less than or equal to 4 meters (m) and a reactor diameter less than or equal to 2 meters (m).

The capsule 100 may include an outer capsule wall 102, an inner capsule wall 104 and an insert 106 disposed between the inner capsule wall 104 and outer capsule walls 102. The capsule 100 may be in the form of a tubular capsule. The capsule 100 is machined to be a negative shape or a reverse mold of the intended reactor vessel's shape. The capsule walls 104 and 102 are formed based on the intended reactor vessel dimension and are sized to account for powder shrinkage during the HIP consolidation process. Such a configuration facilitates uniform flow and filling of material to be consolidated into the capsule 100, mitigating the formation of air gaps, voids, or uneven areas.

The inner capsule wall 104 can include one or more metals (including alloys thereof), or combinations thereof. Examples of suitable materials for the inner capsule wall 104 include, but are not limited to, stainless steel and Ni-based alloys.

The outer capsule wall 102 can include one or more metals (including alloys thereof), or combinations thereof. Examples of suitable materials for the outer capsule wall 102 include but are not limited to stainless steel. The outer capsule wall 102 may be the same material as the inner capsule wall 104 or a different material.

The insert 106 can include one or more metals (including alloys thereof). In some aspects, the material of the insert 106 may be selected based on an intended composition of a substance intended to attack or dissolve the insert 106 after processing. In addition, the material of the insert 106 may be selected based on the processing conditions required for a heat and pressure cycle. For example, the insert 106 may include carbon steel due to its ability to withstand the processing conditions, and ease of being leached out in acidic environments.

The insert 106 is disposed between the inner capsule wall 104 and the outer capsule wall 102 to form two channels. A first channel is formed between the outer capsule wall 102 and the insert 106, and a second channel is formed between the insert 106 and the inner capsule wall 104. The shape, size, thickness, and geometry of the first and second channel is defined by the insert 106. In addition, insert 106 is sized and shaped to achieve a target geometry for the cavity in the reactor vessel after the processing of the capsule 100.

As such, the insert 106 may be machined to have a specific shape in relation to the desired cavity for the reactor vessel. In some examples, the insert 106 may be machined to include a non-uniform cross section, or non-uniform thickness along an entire length or at discrete portions along the insert 106. In some examples, the insert 106 may include a series of bends or curves. In other examples, the insert 106 may include enhanced heat transfer features such as fins and blades. The insert 106 may have smooth edges or may include rough, jagged edges.

The capsule 100 comprises a first material 110 disposed in the first channel and a second material 112 disposed in the second channel. A plurality of stems 108 are coupled to a top end of the capsule 100, serving as powder filling ports as well as outgassing ports. The first channel is loaded and packed with a first material 110 and the second channel is loaded and packed with a second material 112 via the plurality of stems 108. The plurality of stems 108 may also facilitate the outgassing of the capsule 100 after the first material 110 and second material 112 are loaded.

The first material 110 may be metal alloy or a ceramic. The first material 110 may be a powder. In some configurations, the first material 110 may be at least one of a high temperature or a corrosion resistant material. For example, the first material 110 may include at least one of stainless steel or chromium steel. The stainless steel may be in powder form.

The second material 112 may be a metal alloy or a ceramic. The second material 112 may be a powder. In some configurations, the second material 112 may be at least one of a high temperature or corrosion resistant material. For example, the second material 112 may include a nickel (Ni) alloy powder.

In some aspects, the first material 110 and the second material 112 may be selected based on the desired processing conditions required for densification of each material to enable concurrent microstructure development during processing. For example, steel and Ni alloys have a common HIP process window.

In some aspects, the first material 110 and the second material 112 may be selected based on the end use of the intended reactor vessel to be formed. In one exemplary application, the reactor vessel is configured to facilitate reverse water-gas shift reactions which may occur at temperatures greater than 600 degrees Celsius. Thus, the first and second material may include a ceramic so as to withstand the high operating temperature required to facilitate the reverse water-gas shift reaction. In such an application, the inner and outer capsule wall material may be selected based on the processing conditions of the first and second material. When a ceramic powder is utilized as the first and second material, the inner and outer capsule wall may be composed of a refractory metal material capable of withstanding temperatures up to 2500 degrees Celsius. For example, the inner and outer capsule wall may include, but is not limited to, tungsten, molybdenum, tantalum or niobium and alloys thereof.

In some embodiments, the capsule 100 may include one or more cavities or features disposed at various positions around the capsule 100 to accommodate one or more preforms 114. Additional features such as instrument conduit penetrations, electrical attachment ports, and/or various flanged connections may be formed through the preforms 114. For example, the preform 114 may be utilized to form a port 120 in the double-walled reactor vessel. The port 120 may provide an opening in the double-walled reactor vessel for operational control and monitoring, and insertion or removal of material, instruments or fluids. An attachment feature may be connected to the port 120 in the formed double-walled reactor vessel. Examples of attachment features may include inlet and outlet pipes, circulators, probes, sensors, etc. In one example, the preform 114 may be flanged shaped to form a port 120 in the double-walled reactor vessel for fluid flow. The port 120 is in fluid communication with the cavity (i.e., after removal of the insert 106) and inlet and outlet piping may be coupled to the port 120 for coupling the cavity to a fluid source. The preform may be manufactured through methods including, but not limited to, casting, machining, or additive manufacturing. Any suitable method can be used to produce the preform with the precise geometry required for the intended feature. It is contemplated that through such an approach, welding may be used to manufacture the preform, however, the reactor vessel is weld free as compared to welding used in traditional manufacturing approaches.

The preform 114 is filled with a third material and connected to a respective cavity or feature. The third material may be the same as the first material 110 or the second material 112 or may be filled with a different material. In some configurations, when the preform 114 is used to form inlet or outlet flanges in the outer reactor wall (i.e., the consolidated first material in the first channel), the preform 114 may be filled with the first material 110 to enable concurrent microstructure development during the heat and pressure process for full integration. In some configurations, the preform 114 may be filled with a third material different than the first material. In such a configuration, hot isostatic pressing (HIP) may be used for diffusion bonding of the dissimilar alloys, which traditionally would be difficult to weld.

During the heat and treatment process, the preform is maintained in relationship to the one or more cavities. The third material densifies and integrates with either the first material 110 or the second material 112. After the heat and pressure cycle, the preform is removed through mechanical, chemical, or electrolytic methods depending on the location and chemistry of the preform. Advantageously, the feature is fully integrated into reactor vessel, with no weak points or defects, making it suitable for high-pressure and high-temperature applications, such as SAF production. As compared to traditional methods, the features are integrally formed, without the use of additional weld points.

In some embodiments, the insert 106 may include one or more apertures to form a bridge 118 through the cavity (i.e., after removal of the insert 106) connected between the inner reactor wall (i.e., the densified second material 112) and the outer reactor wall (i.e., the densified first material 110). The one or more apertures may be filled with the first material 110, the second material 112 or a combination thereof. In some aspects, the one or more apertures may be filled with a powder or solid forms (e.g., machined geometries) composed of a third material different from the first material 110 and the second material 112. In some aspects, the third material may be composed of different alloy composition than the first and second materials or a different metallic material. In some aspects, a sub-micron metal oxide powder may be incorporated with the metal powders to strength the reactor walls and improve creep resistance at high reaction temperatures.

In some embodiments, the insert 106 may include textured features 116 to incorporate specific textures, patterns, or geometries into the surfaces of the reactor walls to enhance heat transfer. Any number of textured features 116 of various sizes and shapes may be included and may be disposed throughout an entire length of the insert 106 or at discrete positions. In addition, the textured features 116 may be included on either side of both sides of the insert 106.

In some embodiments, the insert 106 may be coated with a metal that is immiscible in the first material 110 and second material 112. The coating may form a diffusion barrier to aid in the leaching processes after the heat and pressure cycle. In addition, the coating may promote separation of the insert 106 during leaching.

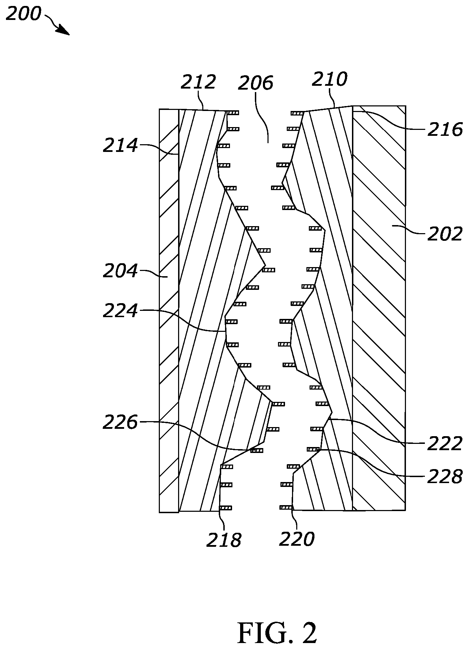

FIG. 2 illustrates a cross section of an exemplary capsule 200. The capsule 200 includes an inner capsule wall 202, an outer capsule wall 204, and an insert 206 defining a first channel proximal to the inner capsule wall 202 and a second channel proximal to the outer capsule wall 204. A first material 210 is loaded in the first channel and a second material 212 is loaded in the second channel. In some embodiments, the exemplary capsule 200 of FIG. 2 is the capsule 100 as described in FIG. 1.

In some aspects, the thickness of the inner capsule wall 202 may be greater than the thickness of the outer capsule wall 204. The increased thickness of the inner capsule wall 202 may increase the structural integrity and stability of maintaining tubular shape during the heat and pressure cycle.

In some embodiments, an inner surface 216 of the inner capsule wall 202 is configured to define an inner diameter of the reactor vessel (i.e., the densified first material 210 after the heat and pressure cycle). The inner surface 216 of the inner capsule wall 202 is disposed at a target inner diameter of the reactor vessel. In some aspects, the inner surface 216 may be undersized, or located at a distance smaller than the target inner diameter of the reactor vessel. Post machining of the inner surface may be utilized to achieve the target inner wall diameter of the reactor vessel.

In some embodiments, an outer surface 214 of the outer capsule wall 204 is configured to define an outer diameter of the reactor vessel (i.e., the densified second material 212 after the heat and pressure cycle). The outer surface 214 of the outer capsule wall 204 is oversized, or located at a distance greater than the target outer diameter of the reactor vessel. Consolidation of the first material 210 and the second material 212 may occur under the high temperature and pressures used during the heat and pressure cycle. This consolidation may lead to a reduction in volume as the first material 210 and second material 212 are compacted and densified. Thus, the added tolerance of the outer capsule wall 204 enables the outer diameter of the outer reactor wall to be achieved accurately after the heat and pressure cycle.

The insert 206 may have a non-uniform cross-section and non-uniform shape that forms the cavity geometry for a cooling channel in the formed reactor vessel. In some embodiments, the insert 206 may have ragged edges.

As shown in FIG. 2, the insert 206 includes a series of bends or curves. In one meander bend 222, insert 206 has a concave area where the thickness of the second material 212 is greater than the thickness of the first material 210 in that region. When the insert 206 is removed in the formed reactor vessel, a local flow rate of the cooling fluid will be greater near the inner reactor wall (i.e., the densified first material 210). As a result, the inner reactor wall will have better heat transfer and more cooling in this region. Similarly, in another meander bend 224, the insert 206 features a convex area where the thickness of the second material 212 is less than the thickness of the first material 210 in that region. In this case, when the insert 206 is removed in the formed reactor vessel, a local flow rate of the cooling fluid will be greater near the outer reactor wall (i.e., the densified second material 212). It is contemplated that the insert 206 is only one exemplary configuration, and the insert 206 may be machined with a varying number of bends, distances between two corresponding points on successive bends, distances between the crests of successive bends, radius of curvature, amplitude and width. The configuration of the insert may be tailored to the end-use of the reactor vessel and the specific cooling, heat transfer and fluid flow requirements.

In some embodiments, a plurality of heat transfer features 226, 228 may be integrated into the inner reactor wall (i.e., the densified first material 210) or the outer reactor wall (i.e., the densified second material 212) through the insert 206 to enhance heat dissipation by increasing the heat transfer surface area. In addition, the insert 206 may further include textured features (as shown in FIG. 1) to incorporate textures, patterns, and geometries into the surfaces of inner and outer reactor walls to enhance heat transfer. The plurality of heat transfer features 226, 228 may be machined into the insert 206 such that the features are integrated into the reactor walls after the heat and pressure cycle and removal of the insert 206. The plurality of features 226, 228 may include fins, blades, curved bends, etc. Any number of features 226, 228 may be included and may be disposed throughout an entire length of the reactor walls or at discrete positions. In addition, the plurality of features 226, 228 may be included on the inner reactor wall, the outer reactor wall, or both reactor walls.

The plurality of features 226, 228 may be composed of a metallic material with high thermal conductivity capable of withstanding high temperatures and the corrosive environments. In some aspects, the metallic material may be selected based on a composition of an acid used during the leaching process. For example, the metallic material may be selected such that it is not attacked by the acid.

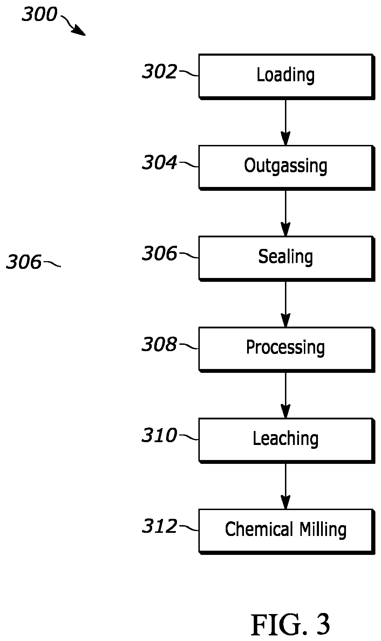

FIG. 3 illustrates an exemplary method for the manufacturing a reactor vessel. The method comprises use of a capsule with an inner capsule wall and an outer capsule wall to define the shape of the reactor vessel. An insert is provided between the inner and outer capsule wall to define the shape of an inner and outer reactor wall and cooling channel geometry. In some approaches, the capsule is the capsule 100 described with reference to FIG. 1.

At block 302, the method 300 includes loading a powder into the capsule via a plurality of stems located at the top of the capsule. The powder includes a first powder and a second powder. The first powder is loaded into the first channel and the second powder is loaded into the second channel.

In some embodiments, the method 300 may further include shaking or agitating the filled capsule to promote uniform distribution of powder within the first and second channel of the capsule.

At block 304, the method 300 includes outgassing the capsule at a leak up rate to remove any trapped gas so the gaps between the powder particles inside the capsule are substantially gas free. During the outgassing, the trapped gas is outgassed through the stems. The method 300 may further include subjecting the filled capsule to a vacuum or a controlled atmosphere to remove any trapped gases within the powder.

At block 306, the method 300 further includes sealing the capsule to prevent any gas from re-entering. In this manner, the loaded powder remains gas free during the subsequent heat and pressure cycle. After sealing the capsule, the method 300 may further include leak checking the capsule to ensure no leaking.

At block 308, the method 300 includes subjecting the filled capsule to high temperatures and pressures to consolidate the powders in the first and second channels. The heat and pressure may be applied to the inner and outer walls of the filled capsule to impart the desired heat and pressure to the loaded powder.

In some embodiments, the filled capsule is placed inside of a furnace configured for a heat and pressure cycle.

In some embodiments, the filled capsule is subject to heat and pressure via a hot isostatic pressing (HIP). In this approach, the filled capsule is placed inside a HIP furnace and subjected to heat and isostatic pressure. A pressurizing medium is used to apply isostatic pressure uniformly in all directions. The pressure medium may be an inert gas. Suitable inert gases include, but are not limited to, argon, helium and nitrogen.

The filled capsule may be subjected to temperatures between 900 degrees Celsius and 1300 degrees Celsius and pressures greater than 12 kilopounds per square inch (ksi) for a hold time greater than 3 hours. It is contemplated that any suitable temperature, pressure and hold time may be applied depending on the material properties (e.g., melting point, sintering point), thickness of the first and second channel and the size of the capsule. For example, the filled capsule may be subjected to temperatures preferably greater than 1100 degrees Celsius and pressures preferably greater than 15 kilopounds per square inch (ksi).

In some configurations, the temperature and pressure may be held constant during the hold time. In some configurations, the temperature and/or pressure may vary throughout the hold time. For example, the temperature and/or pressure may be increased or decreased at various times throughout the hold time. In some configurations, the furnace may include one or more sensors to monitor the processing conditions. A control system in electrical communication with the sensors may be configured to change the temperature and/or pressure based on the monitored processing conditions.

During the heat and pressure cycle, the high temperatures and pressure cause the first and second powder particles densify. An outer diameter of the outer capsule wall is oversized to allow for the powder shrinkage during the heat and pressure cycle. The insert has flexible movement during the heat and pressure cycle to move with the powder shrinkage of the first material conformally.

After the heat and pressure cycle, the first and second powder densify to form an inner and outer reactor wall with substantially no voids, pores, vacancies, or inclusions. In order words, the first and second powder materials have achieved a density of greater than 95 percent of the theoretical density. In some embodiments, the first and second powder materials have achieved near 100 percent of the theoretical density, such as greater than 99 percent of theoretical density.

At block 310, the method 300 includes removing the inner and outer capsule walls and the insert after the furnace and capsule have cooled.

The inner and outer capsule may be removed by machining. In some embodiments, the inner capsule wall and outer capsule wall may be removed by chemical leaching ("leaching"), or electrochemical removal.

In some embodiments, the insert may be removed by leaching. The leaching may include acid leaching. The acid may be selected based on the composition of the insert, the inner and outer capsule walls and the first and second material. For example, acids such as nitric acid may be suitable for targeting the insert, without attacking the first and second material. In some aspects, the insert may be coated with a metal that is immiscible in the first and second powders, forming a diffusion barrier to aid in the leaching processes. The coating may promote separation of the insert during the leaching process.

In some approaches, the leaching may occur at ambient temperature. In some approaches, the acid is maintained at an elevated temperature to expedite the rate of removal. In such an approach, the acid is maintained at a temperature of between about 25 degrees Celsius and about 100 degrees Celsius.

In some embodiments, the insert may be removed by electrolytic leaching. In this case, the block 310 further includes placing the capsule into an electrolyte solution and passing an electrical current through the solution between a cathode and the capsule, which is the anode in the electrochemical circuit. The desired metal ions of the inner or outer capsule material may be dissolved into the solution.

In some embodiments, the insert may removed by a low temperature molten salt or a liquid chemical bath. In this case, the block 310 further includes placing the capsule in a molten salt bath to dissolve the inner or outer capsule materials. The molten salt bath may operate at temperatures between 200 degrees Celsius and 550 degrees Celsius. The composition of the salt may depend on the particular material to be removed. Suitable salts may include, but are not limited to, chlorides, nitrates, and carbonates.

When a hot isostatic pressure (HIP) process is used, an interdiffusion layer may be present between the insert and the consolidated powder. In one example, removal of the insert through acid leaching may partially remove the interdiffusion layer. As such, the method 300 further includes chemically milling the interdiffusion layer after the leaching to remove the remaining interdiffusion layer.

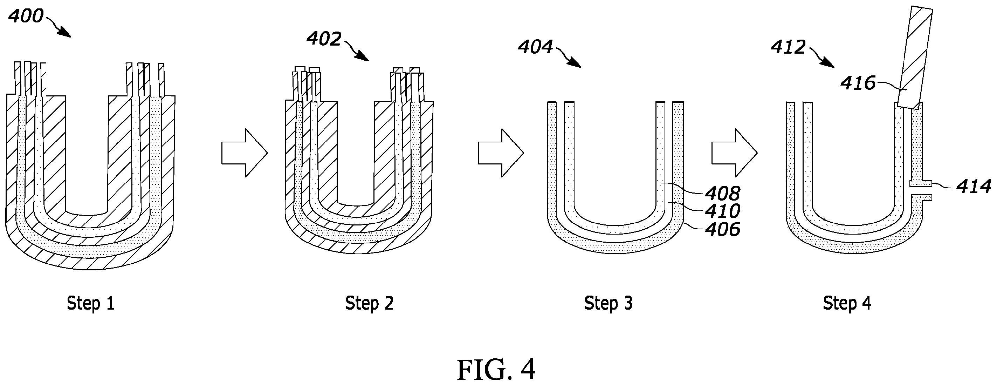

FIG. 4 illustrates an exemplary method of manufacturing a double-walled reactor vessel according to some embodiments of the capsule 100 described herein.

In step 1, a capsule assembly 400 is provided. In some embodiments, the capsule assembly 400 is the capsule 100 described with reference to FIG. 1. The capsule assembly 400 may be machined, weld assembled, and inspected prior to performing the manufacturing process. The capsule assembly 400 includes an insert located between an outer capsule wall and an inner capsule wall. The insert defines a first channel and a second channel. The first channel is filled and packed with a first material and the second channel is filled and packed with a second material.

The filled capsule assembly 400 is subjected to a heat and pressure cycle. The heat and pressure may be applied for a duration of at least 3 hours. In some embodiments, the filled capsule assembly 400 is subject to heat and pressure via hot isostatic pressing (HIP). It is contemplated that the temperatures and pressures used in the heat and pressure cycle may be selected based on the first and second material properties or capsule design. In some configurations, the parameters for the heat and pressure cycle may be varied at different times during the cycle.

In step 2, after the capsule assembly 400 has been subjected to the heat and pressure cycle, the first material and the second material have densified to form a double-walled reactor vessel 402. The densified first material forms an outer reactor wall and the consolidated second material forms an inner reactor wall.

In step 3, the inner capsule wall, the outer capsule wall and the insert are removed. In some approaches, the insert may be removed by acid leaching or electrochemical removal. The inner capsule wall and outer capsule wall may be removed by acid leaching, machining, or electrochemical removal.

The capsule and the insert are removed leaving the double-walled reactor vessel 404. The double-walled reactor 404 includes an inner reactor wall 408, an outer reactor wall 406 and a cavity 410 located between the inner and the outer reactor wall with a non-uniform geometry for location tailored heat transfer and cooling flow. The inner reactor wall 408 and the outer reactor wall 406 are formed as a single integral component without welds or cladding.

In some embodiments, the formed reactor vessel may be subject to additional post heat treatment to further tailor the strength of the inner and outer reactor walls. In some approaches, the post heat treatment may include heating the reactor vessel to a lower temperature to relieve residual stresses that may have been induced during the heat and pressure cycles. In some other approach, the reactor vessel may be subject to an aging process to precipitate secondary phases. In yet another approach, the reactor vessel may be subject to an annealing process to tailor the microstructure of the walls.

In step 4, the reactor vessel 412 is subject to a final assembly and inspection. The final assembly may include attaching an attachment mechanism to at least one port 414 formed in the inner reactor wall or the outer reactor wall. For example, inlet and outlet piping may be attached to the at least one flanged port 414 integrated into the outer reactor wall through the preforms. The cooling channel is coupled to a fluid source through the inlet and outlet piping to enable fluid flow through the reactor.

In some approaches, the final assembly may further include attaching a reactor vessel cap 416 to seal the reactor vessel. The reactor cap may be attached to the reactor vessel by welds, bolts, threaded connections, or clamps.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:

A reactor vessel, the reactor vessel comprising a head portion and a base portion defining a reactor height, comprising: an inner reactor wall comprising a first material; an outer reactor wall comprising a second material; and a cavity bounded by the inner reactor wall and the outer reactor wall, the cavity having a width extending between the inner reactor wall and the outer reactor wall, the width of the cavity being non-uniform along the reactor height; wherein the first material and the second material and joints between the first material and the second material have a density of greater than 95 percent of theoretical density.

The reactor of any preceding clause, wherein the first material and the second material have a density of greater than 99 percent of theoretical density.

The reactor of any preceding clause, wherein the inner reactor wall and the outer reactor wall are formed as single integral component without welds or cladding.

The reactor of any preceding clause, wherein the first material is a first metal alloy, and wherein the second material is a second metal alloy.

The reactor of any preceding clause, wherein the first metal alloy is an alloy having at least one of high temperature resistance or corrosion resistance.

The reactor of any preceding clause, wherein the first metal alloy is a nickel (Ni) alloy and wherein the second metal alloy is stainless steel.

The reactor of any preceding clause, wherein at least one of the inner reactor wall or the outer reactor wall of the reactor vessel includes a plurality of heat transfer features that protrude into the cavity, the heat transfer features including at least one or fins, blades or curved bends.

The reactor of any preceding clause, further comprising: at least one bridge of material extending through the cavity between the inner reactor wall and the outer reactor wall.

The reactor of any preceding clause, wherein the at least one bridge of material may be composed of at least one of the first material, the second material, or a third material.

The reactor of any preceding clause, wherein the outer reactor wall further comprises at least one port in fluid communication with the cavity.

The reactor of any preceding clause, wherein the outer reactor wall further comprises an attachment mechanism coupled to the at least one port for coupling the cavity to a fluid source.

The reactor of any preceding clause, wherein the reactor height is less than or equal to about 4 meters (m), and wherein the reactor vessel has a diameter of less than or equal to about 2 meters (m).

A method of manufacturing a reactor vessel, the method comprising: forming a capsule having an inner capsule wall spaced from and opposite an outer capsule wall, the inner capsule wall and the outer capsule wall defining an opening therebetween; an insert disposed in the opening between the inner capsule wall and the outer capsule wall, the insert defining a first channel between the inner capsule wall and the insert and a second channel between the outer capsule wall and the insert; filling the first channel with a first powder comprising a first material and filling the second channel with a second powder comprising a second material to form a filled capsule assembly; subjecting the filled capsule assembly to heat and pressure sufficient to form a reactor vessel having greater than 95 percent of theoretical density, the reactor vessel comprising an inner reactor wall comprising the first material and an outer reactor wall comprising the second material; and exposing the insert to a solvent to leach away the insert and form a cavity between the inner reactor wall and the outer reactor wall.

The method of any preceding clause, wherein the capsule comprises at least one of low carbon steel or stainless steel.

The method of any preceding clause, wherein the insert comprises carbon steel, and wherein the solvent is an acid.

The method of any preceding clause, wherein the first material is a first metal alloy and the second material is a second metal alloy.

The method of any preceding clause, wherein the filled capsule assembly is subjected to heat at a temperature of between about 900 degrees Celsius and about 1300 degrees Celsius and to a pressure of greater than about 12 kilopounds per square inch (ksi).

The method of any preceding clause, wherein the filled capsule assembly is subjected to heat and pressure for a duration of at least about 3 hours.

The method of any preceding clause, wherein the insert is soluble in the solvent, and wherein the first material and the second material are insoluble in the solvent.

The method of any preceding clause, wherein an inner diameter of the capsule is about the same size as a target inner diameter of the reactor vessel.

The method of any preceding clause, wherein the filled capsule assembly is subject to heat and pressure via hot isostatic pressing (HIP).

The method of any preceding clause, wherein the insert is shaped to achieve a target geometry for the opening.

The method of any preceding clause, further comprising outgassing the filled capsule assembly and sealing the filled capsule assembly prior to subjecting the filled capsule assembly to heat and pressure assembly to heat and pressure.

The method of any preceding clause, further comprising chemically milling the insert to remove an interdiffusion layer formed between the insert and consolidated powder.

## Claims

1. A reactor vessel (410), the reactor vessel comprising a head portion and a base portion defining a reactor height, comprising:
an inner reactor wall (406) comprising a first material;
an outer reactor wall (404) comprising a second material; and
a cavity (408) bounded by the inner reactor wall (406) and the outer reactor wall (404), the cavity (408) having a width extending between the inner reactor wall (406) and the outer reactor wall (404), the width of the cavity (408) being non-uniform along the reactor height;
wherein the first material and the second material and joints between the first material and the second material have a density of greater than 95 percent of theoretical density.

2. The reactor vessel of claim 1, wherein the first material and the second material have a density of greater than 99 percent of theoretical density.

3. The reactor vessel of any preceding claim, wherein the inner reactor wall (406) and the outer reactor wall (404) are formed as single integral component without welds or cladding.

4. The reactor vessel of any preceding claim, wherein the first material is a first metal alloy having at least one of high temperature resistance or corrosion resistance, and wherein the second material is a second metal alloy.

5. The reactor vessel of any preceding claim, wherein at least one of the inner reactor wall (406) or the outer reactor wall of the reactor vessel includes a plurality of heat transfer features (226, 228) that protrude into the cavity, the heat transfer features including at least one of fins, blades or curved bends.

6. The reactor vessel of any preceding claim, wherein the outer reactor wall (404) further comprises at least one port (412) in fluid communication with the cavity (408).

7. A method of manufacturing a reactor vessel, the method comprising:
forming a capsule (100) having an inner capsule wall (104) spaced from and opposite an outer capsule wall (102), the inner capsule wall (104) and the outer capsule wall (102) defining an opening therebetween;
positioning an insert (106) in the opening between the inner capsule wall (104) and the outer capsule wall (102), the insert (106) defining a first channel between the inner capsule wall and the insert and a second channel between the outer capsule wall and the insert;
filling the first channel with a first powder comprising a first material (110) and filling the second channel with a second powder comprising a second material (112) to form a filled capsule assembly;
subjecting the filled capsule assembly (100) to heat and pressure sufficient to form a reactor vessel, the reactor vessel comprising an inner reactor wall comprising the first material (110) and an outer reactor wall comprising the second material (112), wherein the inner reactor wall and the outer reactor wall have a density of greater than 95 percent of theoretical density; and
exposing the insert (106) to a solvent to leach away the insert and form a cavity between the inner reactor wall and the outer reactor wall.

8. The method of claim 7, wherein the capsule (100) comprises at least one of low carbon steel or stainless steel and the first material (110) is a first metal alloy and the second material is a second metal alloy.

9. The method of claim 7 or 8, wherein the insert (106) comprises carbon steel, and wherein the solvent is an acid.

10. The method of any of claims 7 to 9, wherein the insert (106) is soluble in the solvent, and wherein the first material and the second material are insoluble in the solvent.

11. The method of any of claims 7 to 10, wherein an inner diameter of the capsule (100) is about the same size as a target inner diameter of the reactor vessel.

12. The method of any of claims 7 to 11, wherein the filled capsule assembly is subjected to heat and pressure via hot isostatic pressing (HIP).

13. The method of any of claims 7 to 12, wherein the insert (106) is shaped to achieve a target geometry for the opening.

14. The method of any of claims 7 to 13, further comprising outgassing the filled capsule assembly and sealing the filled capsule assembly prior to subjecting the filled capsule assembly to heat and pressure.

15. The method of any of claims 7 to 14, further comprising chemically milling the insert to remove an interdiffusion layer formed between the insert and consolidated powder.
